# FASCICULE DE BREVET EUROPEEN

(11) **EP 0 549 424 B1**
(45) Date de publication et mention de la délivrance du brevet: **02.08.1995**
(21) Numéro de dépôt: 92403446.5
(22) Date de dépôt: 17.12.1992
(51) Int. Cl.: B23K 11/30

(54) **Procédé et machine pour échanger des extrémités de contact sur des électrodes de soudage à resistance par points**
Verfahren und Maschine zum Auswechseln von Kontaktendflächen bei Widerstands-Punktschweiss-Elektroden
Method and machine for exchanging contact end surfaces on resistance spot welding electrodes

(30) Priorité: 20.12.1991 FR 9115893
(43) Date de publication de la demande: 30.06.1993
(73) Titulaire: ARO, F-72500 Château-du-Loir (FR)
(72) Inventeur: Boyer, Jean-Noel, F-37390 Mettray (FR); Le Gall, Patrick, F-37230 Fondettes (FR)
(74) Mandataire: Picard, Jean-Claude Georges

(56) Documents cités:
- GB-A- 575 742
- US-A- 2 446 932
- PATENT ABSTRACTS OF JAPAN vol.8, no. 186 (M-320)(1623) 25 Août 1984 & JP-A-59 076 684 (TOSHIBA K.K.) 1 Mai 1984

## Description

La présente invention concerne un procédé du type défini au préambule de la revendication 1, ainsi qu'une machine pour la mise en oeuvre de ce-procédé.

Les électrodes de soudage à résistance par points (US-A-2 446 932) (portées par exemple par une pince manoeuvrée par un robot), en particulier leurs embouts de soudage, sont soumises à des contraintes mécaniques et thermiques, et par suite à une usure importante, du fait de la mise en contact répétitive et sous pression de leur extrémité avec les tôles à souder, et de l'importance des intensités du courant électrique qui les traverse, qui peuvent être de l'ordre de 10 000 A sous basse tension. Ce courant provoque une fusion ponctuelle du métal de ces tôles, et l'extrémité de l'électrode peut donc être soumise à des élévations de température très importantes, nonobstant le refroidissement fourni par l'eau en circulation dans le circuit précité.

Il y a lieu de considérer, à ce sujet, que la dynamique de formation d'un noyau soudé et sa reproductivité dans le temps sont très dépendantes de la qualité du contact entre les électrodes et les tôles. Or, ce contact se dégrade très rapidement dans le temps selon différents processus ; tout d'abord, il y a une dégradation géométrique, causée par les chocs répétés dus à la fermeture de la pince de soudage et par le fait que les électrodes ne sont pas toujours parfaitement perpendiculaires aux tôles (programmation du robot). Le fort dégagement de chaleur qui se produit pendant le soudage, ce qui provoque une altération des propriétés mécaniques du cuivre, fait que la surface de contact a tendance à s'accroître. La surface de tôle dans laquelle passe le courant de soudage devenant plus importante, un même courant de soudage ne permet plus d'obtenir la fusion dans un temps identique.

Ensuite, on assiste à une dégradation métallurgique, du fait de l'oxydation des surfaces de contact, due à l'élévation de température et au transfert d'oxydes métalliques entre tôles et électrodes. Lors du soudage de tôles revêtues (zinguées, aluminées, etc.), il y a transfert du métal de revêtement vers l'électrode et constitution d'une couche de zinc ou d'aluminium modifiant considérablement les résistances de contact électrodes/tôles, et pouvant même provoquer des collages ou soudages entre électrodes et tôles.

Pour résoudre ces problèmes, de nombreux palliatifs ont été mis en place : on a pensé tout d'abord à effectuer un nettoyage des électrodes par rodage avec une périodicité donnée, mais en aucun cas le rodage ne permet de récupérer la qualité géométrique de l'électrode neuve. De plus, le coût de cette opération, comprenant l'automatisation du procédé, l'achat et la mise en place de l'équipement et dans certains cas la perte de productivité, est relativement onéreux.

On a également pensé à augmenter progressivement le courant de soudage pour tenir compte de la dégradation des électrodes, mais il s'agit d'une méthode extrêmement empirique, qui permet certes d'améliorer la situation, mais sans toutefois assurer une régularité de qualité satisfaisante, car les processus de dégradation des électrodes sont extrêmement complexes et peu répétitifs.

On doit donc se résoudre, surtout quand la cadence de soudage est élevée, à remplacer régulièrement et fréquemment le corps d'électrode, et surtout l'embout de soudage. Ainsi, l'embout de soudage peut avoir à être changé plusieurs fois par jour, et le corps d'électrode une fois pour chaque dizaine ou pour chaque vingtaine de changements de l'embout.

Comme, de la sorte, on peut avoir besoin de désolidariser l'embout de soudage du corps d'électrode, on utilise souvent, entre les deux, un emmanchement conique.

Le but de la présente invention est d'éliminer tous ces inconvénients de la technique antérieure et de permettre un changement automatique et facile des extrémités de contact des embouts de soudage, à moindres frais.

A cet effet, un procédé du type défini dans le préambule de la revendication 1 est caractérisé en ce qu'il consiste à utiliser un plateau tournant associé à des moyens moteurs d'entraînement en pas à pas et muni, de part et d'autre d'une plaque résistive, d'un certain nombre de logements recevant et maintenant lesdites extrémités de contact, la pince de soudage étant écartée de sa position normale de soudage et amenée dans une position de rééquipement pour laquelle les embouts de soudage des électrodes viennent se positionner respectivement vis-à-vis de logements libres dudit plateau, par suite de quoi les extrémités de contact usagées correspondantes, une fois désolidarisées desdits embouts, sont recueillies par ces logements, le plateau est pivoté d'un pas pour amener en face desdits embouts des extrémités de contact neuves, lesquelles sont alors fixées à leur tour par brasage sur les embouts de soudage respectifs des électrodes, suite à quoi la pince ainsi rééquipée est ramenée en position de soudage jusqu'au prochain cycle d'échange.

L'invention concerne encore une machine conçue spécialement pour l'échange des extrémités de contact des électrodes de soudage à résistance par points qui viennent d'être décrites.

Avantageusement une telle machine pourra se caractériser en ce qu'elle comporte un plateau tournant accouplé à des moyens moteurs d'entraînement en pas à pas, ce plateau étant associé :
(a) à un poste de chargement d'extrémités de contact neuves, ledit plateau comportant à cet effet au moins un alvéole de chargement propre à recevoir une extrémité de contact neuve lors de son arrêt en face dudit poste ; et
(b) à un poste de brasage-débrasage d'extrémités de contact respectivement neuves et usagées, la machine comportant à cet effet au moins une paire de mâchoires propres à enserrer une extrémité de contact en cours de débrasage, et ledit poste de brasage-débrasage comportant une plaque résistive sur laquelle peut prendre appui ladite extrémité de contact et permettant le passage du courant de brasage ou de débrasage par cette extrémité,
et en ce que les différents organes de la machine sont associés à des moyens de commande séquentielle automatique assurant qu'une opération de chargement d'extrémités de contact neuves audit poste de chargement s'effectue pendant une opération de débrasage d'extrémités usagées audit poste de brasage-débrasage, et que ledit alvéole de chargement, équipé d'au moins une extrémité de contact neuve, vienne ensuite par une rotation dudit plateau, au niveau dudit poste de brasage-débrasage, pour que ladite extrémité neuve puisse être brasée sur l'électrode préalablement débarrassée de son extrémité de contact usagée.

Le fonctionnement d'une telle machine sera décrit plus bas ; il est à souligner que ce fonctionnement pourra bien entendu être entièrement automatisé et s'incorporer commodément dans les cycles de soudage habituels.

Des modes d'exécution de l'invention vont maintenant être décrits à titre d'exemples non limitatifs avec référence aux figures du dessin annexé dans lequel :
- la figure 1 représente en élévation avec parties en coupe deux électrodes de soudage à résistance ;
- la figure 2 est une vue en plan de l'intérieur d'une extrémité de contact à anneau de brasure ;
- la figure 2a montre une variante d'extrémité de contact à anneau de brasure plat ;
- la figure 2b montre cette extrémité de contact brasée sur un embout de soudage ;
- la figure 3 est une vue en coupe axiale de l'embout de soudage d'une électrode équipé d'une extrémité de contact brasée ;
- la figure 4 montre une variante selon laquelle, contrairement au cas de la figure 3, l'alésage interne de l'embout débouche directement sur l'extrémité de contact, cette dernière étant pourvue d'un piton central conique ;
- la figure 5 est une variante du mode de réalisation de la figure 4 dans laquelle le piton conique de l'extrémité de contact comporte une rainure hélicoïdale ;
- la figure 6 est une vue schématique en élévation d'une machine conforme à l'invention ;
- la figure 7 est une vue en plan partielle montrant le plateau tournant de cette machine ;
- la figure 8 montre un détail du schéma de la figure 6 ;
- la figure 9 est une vue en plan schématique d'un autre type de machine conforme à l'invention ; et
- la figure 10 est une vue schématique avec coupes axiales partielles de la machine de la figure 9.

Sur toutes les figures on a utilisé les mêmes références pour désigner les mêmes éléments des électrodes ou des éléments analogues.

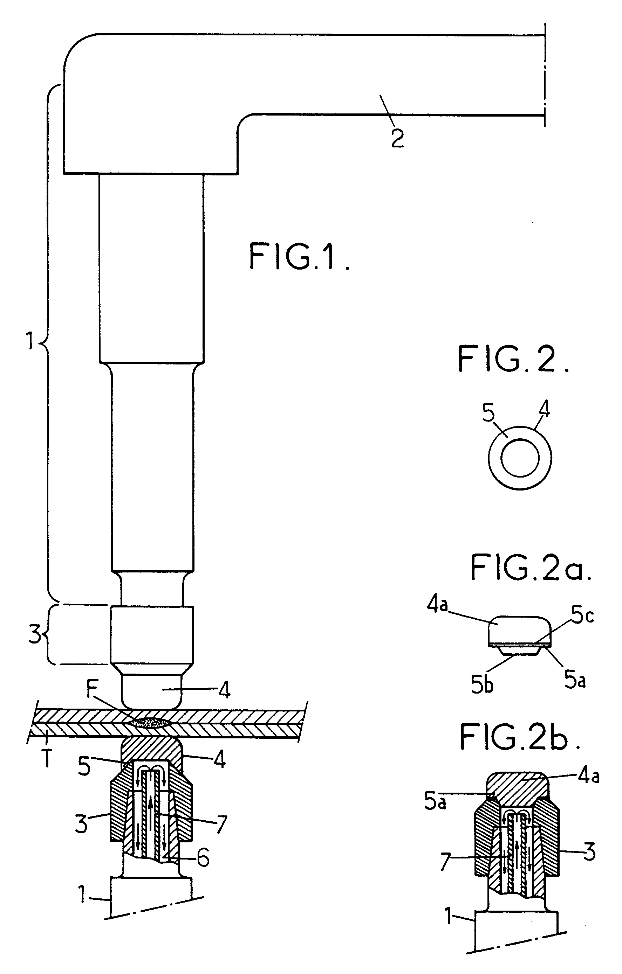

La référence 1 désigne le corps d'électrode, lequel peut être fixé par tout moyen approprié à un bras de support 2 faisant par exemple partie d'une pince de soudage à deux bras manipulée par un robot sur une chaîne de soudage par points, par exemple de tôles de carrosserie de véhicules ou analogues. Ces tôles ont été référencées en T sur la figure 1. Comme on le sait, la solidarisation ponctuelle des deux tôles concernées s'effectue par une fusion F du métal à leur point de contact, fusion causée par le passage d'un courant électrique de forte intensité entre deux électrodes opposées et pressant entre elles les tôles T lors de la fermeture, sous pression contrôlée, de la pince de soudage.

En 3, on a référencé l'embout de soudage, lequel peut être fixé par emmanchement conique autoserrant sur le corps d'électrode 1 ou pourrait même faire partie de ce corps. L'extrémité de contact 4, à savoir l'extrémité de l'électrode qui sera pressée sur les tôles T, au lieu d'être d'une pièce avec l'embout de soudage 3, est solidarisée de celui-ci par brasage. A cet effet, les extrémités de contact 4 sont pourvues d'un anneau de brasure référencé en 5 à la figure 2 et dans la partie en coupe de la figure 1.

Dans la variante de réalisation des figures 2a et 2b, au lieu d'utiliser un anneau de brasure conique 5, on utilise un anneau de brasure plat 5a engagé sur une extrémité de contact 4a possédant autour d'un collet conique 5b un siège plat 5c de dimensions correspondantes. Ainsi il est facile d'assurer la solidarisation entre cet anneau de brasure 5a et l'extrémité de contact 4a en encliquetant l'anneau sur ledit collet 5b, ou encore en soudant l'anneau sur le siège plat 5c par des points de soudure. Cette variante présente aussi l'avantage, sur le mode de réalisation de la figure 1, de rendre les extrémités de contact 4a plus faciles à fabriquer, par exemple par découpage au tour à partir d'une barre de cuivre.

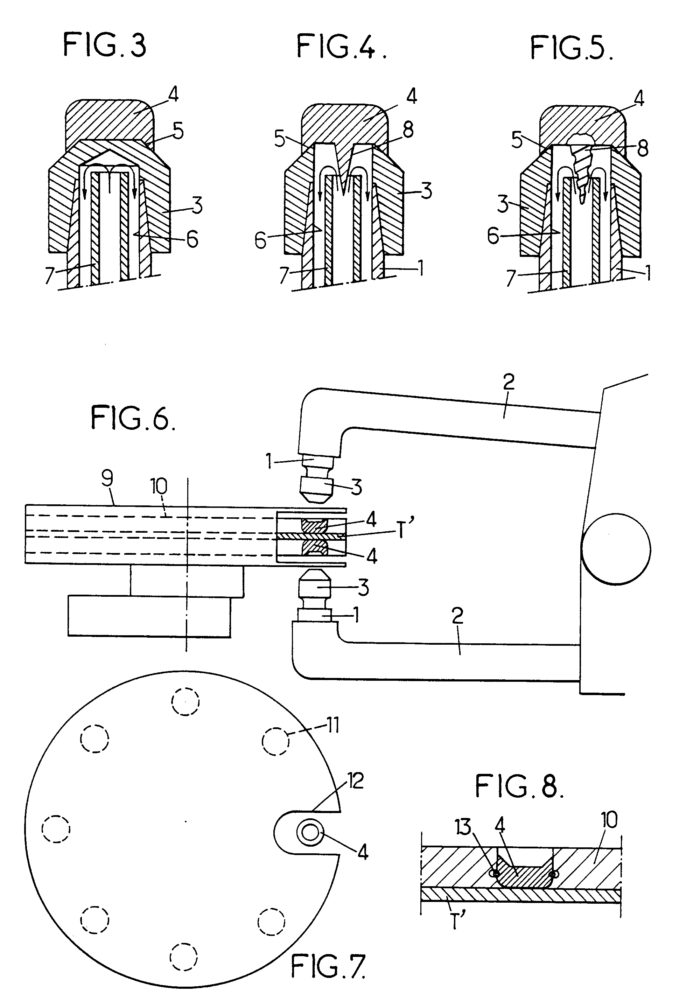

Quel que soit le mode de réalisation, on voit que lorsque les extrémités de contact 4 sont usées ou détériorées, il est très facile de les retirer des embouts de soudage correspondants 3 en fermant la pince de préférence sur une plaque résistive spéciale T' (voir figure 6), en interrompant la circulation de l'eau de refroidissement, et en faisant passer dans les électrodes un courant d'intensité et de durée suffisantes pour provoquer la fusion de la brasure 5. La pince étant ensuite ouverte, les extrémités usées 4 sont retirées et l'on dispose des extrémités 4 neuves sur les extrémités correspondantes des embouts de soudage 3. Ensuite il suffit de refermer la pince sur la plaque T', la circulation d'eau de refroidissement étant toujours interrompue, puis de refaire passer un courant de forte intensité dans les électrodes pour fondre l'anneau de brasure 5 des extrémités neuves 4 et assurer ainsi leur assujettissement sur les embouts correspondants 3. Après interruption du courant dans les électrodes, on peut d'ailleurs prévoir une certaine durée pendant laquelle la pression de la pince est maintenue sur la plaque T' pour permettre à la brasure de se refroidir suffisamment avant de supprimer la pression sur la plaque T' et de renvoyer la pince dans la ligne de soudage des tôles T.

Sur la figure 1, de même que sur les figures 4 et 5, on a représenté une variante selon laquelle l'alésage interne 6 des embouts 3, qui sert à l'évacuation de l'eau de refroidissement amenée à l'extrémité de l'électrode par une conduite intérieure 7, débouche directement sur le fond de l'extrémité de soudage correspondante 4. Dans le mode de réalisation de la figure 3 au contraire, l'embout de soudage 3 est fermé et le refroidissement de l'extrémité de contact 4 est alors assuré par conduction entre les surfaces de contact de cette extrémité et de l'embout de soudage 3. Ce mode de réalisation permet d'éviter la vidange complète du circuit de refroidissement avant l'échange de l'extrémité usée 4 par une extrémité neuve.

Le mode de réalisation des figures 4 et 5 oblige à une telle vidange préalable, mais il permet par contre de prévoir au centre des extrémités de contact 4 un piton conique 8 (fig. 4), éventuellement pourvu d'une rainure hélicoïdale (fig. 5), ceci pour favoriser les échanges thermiques entre l'eau issue de la conduite interne 7 et le fond de l'extrémité de contact correspondante 4.

Les changements des extrémités de contact peuvent être facilement automatisés grâce à une machine telle que celle qui est schématisée sur les figures 6 et 7.

Sur ces figures, on a encore référencé en 2 les bras de support portant les corps d'électrode 1, lesquels supportent à leur tour à leurs extrémités respectives les embouts de soudage 3, ceci ayant été représenté à la figure 6 après désolidarisation des extrémités de contact correspondants 4. Les extrémités de contact de remplacement peuvent être disposées à l'opposé l'une de l'autre dans un certain nombre de logements 11 prévus sur un plateau tournant 10 entraîné en rotation par un moteur ou un vérin pas à pas. Un dispositif de maintien mécanique à clips 13 ou à mâchoires permet de maintenir en place les extrémités de contact 4 dans leurs logements (figure 8). De la sorte, quand le moteur a été arrêté dans une position pour laquelle les deux extrémités neuves 4 se trouvent vis-à-vis des embouts de soudage 3, par une ouverture 12 prévue dans un capot de protection 9 du plateau tournant, on voit que l'on peut procéder rapidement à leur fixation sur les embouts 3 en commandant la fermeture de la pince 2-2 pour que les embouts viennent s'ajuster par leur partie conique dans la partie conique correspondante des extrémités de contact 4, par suite de quoi la circulation de l'eau de refroidissement étant stoppée, il suffira de commander dans les électrodes le passage d'un courant d'intensité et de durée suffisantes pour fondre les anneaux de brasure 5 et assujettir ainsi les extrémités de contact sur les embouts respectifs 3.

Ces opérations étant terminées, on provoque la réouverture de la pince 2-2 et on peut la ramener alors dans la ligne de soudage des tôles T.

Sur la figure 6, on a également représenté en T' la plaque spéciale résistive, par exemple en graphite ou en acier inoxydable qui permet d'augmenter rapidement la température des embouts 4 sans avoir besoin d'un courant d'intensité excessive dans les électrodes.

Lorsqu'il sera à nouveau nécessaire de changer les extrémités de contact, on ramènera la pince dans la position de la figure 6 et on aura fait tourner dans l'intervalle le plateau 9, par exemple d'un pas, pour amener vis-à-vis des embouts 3, les nouvelles extrémités de contact 4, tandis que les extrémités usées précédemment extraites occuperont d'autres logements 11 du plateau 10. Lorsque ce plateau sera entièrement garni d'extrémités de contact usagées et ne comportera plus d'extrémités de contact neuves, il suffira de le vider et de le regarnir de nouvelles extrémités de contact, ou encore de démonter le plateau et de le remplacer par un autre plateau préalablement regarni d'extrémités de contact neuves, ceci pour un gain de temps.

Il est à noter que l'on peut bien entendu imaginer différents couples temps-température pour produire la fusion de l'anneau de brasure 5, que ce soit pour retirer une extrémité de contact usagée, ou pour mettre en place une extrémité de contact neuve. On peut ainsi obtenir facilement les conditions optimales pour minimiser le temps nécessaire aux opérations susdécrites tout en évitant de dégrader les propriétés mécaniques des embouts de soudage 3 provoquant pour ces embouts un échauffement trop important.

On sait que dans certaines configurations le robot ne manipule pas la pince de soudage 2-2, comme cela a été supposé dans le cas de la figure 6, mais au contraire déplace les tôles T, la pince 2-2 étant alors fixe par rapport au sol. Il va de soi que dans un tel cas le principe général de la machine qui vient d'être décrite est encore valable, étant alors seulement nécessaire de prévoir que le robot puisse se saisir du dispositif d'échange des extrémités de contact pour le présenter devant la pince, et notamment pour amener le plateau 10 dans la position qu'il occupe à la figure 6 par rapport à la pince 2-2. Le plateau distributeur 10 pourrait aussi être monté sur un bras manipulateur associé au corps de pince ou au support de pince, ce bras amenant alors automatiquement le plateau entre les bras de pince lorsque la procédure d'échange des extrémités de contact serait commandée.

On peut également imaginer que dans certaines situations (pince-machine, pince manuelle) un opérateur se saisisse manuellement du dispositif d'échange d'extrémités, le positionne entre les électrodes de la pince, et déclenche les opérations de débrasage et rebrasage des extrémités de contact. On pourrait dans ce cas construire des outils d'échange plus adaptés (légers, maniables), à cette situation.

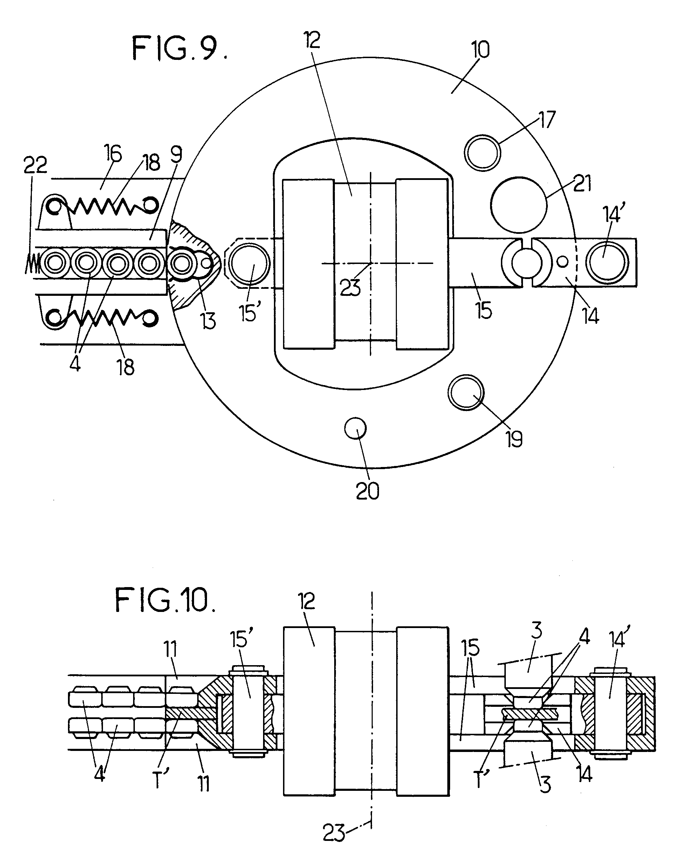

La machine représentée à titre de variante sur les figures 9 et 10 est perfectionnée par rapport à celle qui vient d'être décrite, tant en ce qui concerne sa vitesse de fonctionnement qu'en ce qui concerne la bonne réalisation des opérations de débrasage des extrémités de contact usagées.

Il convient de rappeler que pour effectuer une opération de débrasage il est nécessaire de refermer les électrodes 1 sur une plaque résistive T' et de les maintenir dans cette position pendant tout le temps de passage du courant de débrasage et en les soumettant à un effort bien déterminé, de l'ordre de 150 à 200 daN. Bien entendu l'évacuation des extrémités de contact usées 4 ne peut se faire qu'après réouverture de la pince 2-2. Or on s'est rendu compte que le temps, de l'ordre de 100 à 1500 ms, qui s'écoule entre le moment où l'on arrête le passage du courant de débrasage et le moment où les électrodes 1 sont effectivement ouvertes, temps qui correspond au temps de réponse des électrodistributeurs commandant l'ouverture de la pince 2-2 et au temps d'admission de l'air dans le vérin, était suffisant pour qu'un refroidissement du joint brasé (entre l'extrémité de contact 4 et par exemple un embout 3) se produise et tende à refermer la brasure, ce qui empêche alors l'évacuation normale de l'extrémité usée concernée.

Un autre problème est apparu, qui tient à la capillarité de la brasure fondue, ce phénomène ayant tendance à maintenir sur l'embout 3 une extrémité de contact 4 débrasée, même si les forces de capillarité en cause sont relativement réduites du fait du faible poids des extrémités de contact 4.

La machine perfectionnée qui va maintenant être décrite permet de résoudre ces deux problèmes.

Cette machine se caractérise essentiellement, à cet effet, en ce qu'elle comporte un plateau tournant associé à des moyens moteurs d'entraînement en pas à pas, ce plateau étant associe :
a) à un poste de chargement d'extrémités de contact neuves, ledit plateau comportant à cet effet au moins un alvéole de chargement propre à recevoir une extrémité de contact neuve lors de son arrêt en face dudit poste; et
b) à un poste de brasage-débrasage d'extrémités de contact respectivement neuves et usagées, ledit plateau comportant à cet effet au moins une paire de mâchoires propres à enserrer une extrémité de contact en cours brasage ou de débrasage, et ledit poste de brasage-débrasage comportant une plaque résistive sur laquelle peut prendre appui ladite extrémité de contact et permettant le passage du courant de brasage ou de débrasage par cette extrémité,
et en ce que les différents organes de la machine sont associés à des moyens de commande séquentielle automatique assurant qu'une opération de chargement d'extrémités de contact neuves audit poste de chargement s'effectue en même temps qu'une opération de débrasage d'extrémités usagées audit poste de brasage-débrasage, et que ledit alvéole de chargement, équipé d'au moins une extrémité de contact neuve vienne ensuite, pour une relation dudit plateau, au niveau dudit poste de brasage-débrasage, pour que ladite extrémité neuve puisse être brasée sur l'électrode débarrassée de son extrémité de contact usagée.

Ainsi les mâchoires qui viennent d'être mentionnées permettront de s'affranchir des forces de capillarité qui autrement tendraient à maintenir une extrémité de contact débrasée en quelque sorte collée sur l'embout correspondant. Grâce aux mâchoires, lorsque l'électrode 1 correspondante sera écartée de la plaque résistive T' elle n'emmènera pas avec elle l'extrémité de contact 4, celle-ci étant alors maintenue enserrée entre les deux mâchoires.

Par ailleurs, la machine qui vient d'être définie sous sa forme la plus générale permet également de résoudre le problème des temps de réponse des électrodistributeurs et du vérin puisqu'elle permet d'anticiper la commande d'ouverture de la pince de soudage par rapport à l'instant de la coupure du courant de débrasage, ceci grâce à une programmation appropriée desdits moyens de commande séquentielle automatique.

Bien entendu également ces moyens de commande séquentielle seront agencées pour que la coupure du courant de débrasage intervienne immédiatement avant la rupture du contact entre la plaque résistive et les extrémités de contact usagées, ceci pour éviter que ne se produise un arc électrique qui serait préjudiciable à la durée de vie des embouts d'électrode.

La machine représentée aux figures 9 et 10 comporte essentiellement un support 16 portant un plateau 10 propre à pivoter autour d'un axe de rotation 17. Ce plateau peut être entraîné en rotation pas à pas par des moyens moteurs quelconques non représentés mettant par exemple en oeuvre un vérin ou analogue. Le poste de chargement mentionné plus haut et situé à gauche des figures 9 et 10 comporte essentiellement un chargeur 9 disposé radialement par rapport au plateau tournant 10 et dans lequel des extrémités de contact neuves 4 sont sollicitées élastiquement, vers ledit plateau 10, par des ressorts 18. Dans la position qui est représentée sur les figures ce poste de chargement et plus exactement le chargeur 9 qui vient d'être mentionné se trouvent vis-à-vis de deux alvéoles de chargement 11 du plateau, dans lesquels peuvent être maintenues à l'opposé l'une de l'autre deux extrémités de contact 4 grâce à un clip élastique 13. Le plateau 10 est circulaire mais est légèrement excentré par rapport à son axe de rotation 17, de sorte que cette introduction des extrémités de contact 4 dans les alvéoles de chargement 11, à partir du chargeur 9, s'effectue automatiquement dans la position représentée sur les figures, alors que le chargeur 9 est repoussé radialement vers l'extérieur par le plateau lorsque celui-ci occupe une position pivotée à 180° par rapport à celle qui est représentée.

Il est à noter que le système de chargeur 9 et de ressorts 18 pourrait être remplacé par tout autre système équivalent, par exemple une came, un petit vérin pneumatique ou même une mise en place manuelle, dans le cas où le remplacement des extrémités de contact serait peu fréquent.

On constate par ailleurs que le clip élastique 13 est parfaitement adapté à maintenir deux extrémités de contact dans les alvéoles de chargement 11 par exemple sur la plaque résistive T', quelle que soit l'orientation de la machine dans l'espace.

A l'opposé du poste de chargement qui vient d'être décrit se trouve le poste de brasage-débrasage. Ce poste comporte essentiellement deux mâchoires, à savoir une mâchoire fixe 14 et une mâchoire mobile 15, montées sur le plateau 10, la mpâchoire mobile pouvant être commandée radialement par un vérin pneumatique ou analogue 12 et ces deux mâchoires pouvant par ailleurs légèrement pivoter, la mâchoire mobile autour d'un axe 15' et la mâchoire fixe autour d'un axe 14' pour pouvoir s'adapter parfaitement sur l'extrémité de contact 4 concernée.

Le fonctionnement d'une telle machine pourra être le suivant : la position initiale du plateau étant supposée être celle qui est représentée sur les figures, la pince 2-2 est refermée sur la plaque résistive T', de sorte que les deux électrodes 1 soient pressées l'une contre l'autre contre cette plaque par l'intermédiaire de leurs extrémités de contact usagées respectives 4. Le courant de débrasage traverse alors les électrodes et provoque la fusion de la brasure des extrémités de contact. Peu avant la coupure du courant de débrasage traversant les électrodes 1, l'ouverture de la pince 2-2 est commandée de sorte qu'elle se produise pratiquement sans aucun retard dès que le courant de débrasage est coupé. Les mâchoires 14, 15 enserrant les extrémités de contact usagées ainsi détachées des embouts de soudage, l'écartement des électrodes n'est pas susceptible d'entraîner les embouts par capillarité de la brasure fondue et les mâchoires peuvent par conséquent être ouvertes. Le plateau est alors mis en rotation dans le sens horaire, ce qui entraîne le début de l'évacuation des extrémités de contact usagées : lors de cette première rotation du plateau 10 des premiers détecteurs de proximité 19 permettent de s'assurer de la présence des extrémités de contact 4 usagées en cours d'évacuation, et des seconds détecteurs de proximité 17 permettent de s'assurer de la présence d'extrémités de contact 4 neuves en cours de transfert vers le poste de brasage-débrasage. Au cours de cette rotation, comme indiqué plus haut, le chargeur 9 est repoussé vers l'arrière et le poste de déchargement passe devant des pions d'évacuation 20 servant de butée pour les extrémités de contact débrasées, lesquelles peuvent alors être évacuées par une ouverture 21 du plateau, située immédiatement derrière le poste de débrasage. Losque le poste de débrasage parvient vis-à-vis du chargeur 9, les deux extrémités de contact neuves 4 primitivement chargées dans les alvéoles de chargement 11 parviennent au poste de brasage-débrasage et peuvent alors être automatiquement brasées sur les embouts de soudage 3, là encore par alimentation des électrodes 1 en courant et pressage des extrémités de contact sur la plaque résistive T'. Lorsque les opérations de brasage des extrémités de contact neuves sont terminées, le plateau subit une seconde rotation de 180°, dans le sens anti-horaire, pour être ramené dans sa position initiale de chargement des extrémités neuves dans les alvéoles 11, le poste de brasage-débrasage étant alors, lui, également ramené dans sa position initiale.

Il est à noter qu'au cours de cette seconde rotation de 180° le poste de chargement repasse devant les détecteurs de position 17, ce qui permet de vérifier que les alvéoles de chargement 11, de retour vers le poste de chargement, sont vides; de même pour les détecteurs de proximité 19 vis-à-vis du poste de déchargement du plateau.

Enfin il est à mentionner que la machine qui vient d'être décrite permet de monter des extrémités éventuellement différentes sur l'électrode supérieure et sur l'électrode inférieure de la pince. L'articulation des mâchoires fixe et mobile 14 et 15 n'est pas absolument indispensable mais permet de réaliser commodément, lors de leur fermeture, leur autocentrage sur les extrémités de contact usagées 4.

## Revendications

1. Procédé pour échanger des extrémités de contact (4) sur des électrodes de soudage à résistance par points du type comportant un corps d'électrode (1) propre à être monté sur un bras de support (2) et à être relié à une source de courant de soudage de forte intensité, ainsi qu'à un circuit (6, 7) d'alimentation en eau de refroidissement, cette électrode comportant en outre un embout de soudage (3) solidaire de l'extrémité dudit corps (1), cet embout (3) possédant lui-même une extrémité de contact (4) consommable dont le rôle est d'assurer le contact avec les tôles (T) à souder et de leur transmettre la pression et l'intensité du courant de soudage, ladite extrémité de contact (4) des embouts de soudage étant une pièce distincte de l'embout (3) et étant connectée à cet embout par brasage, le courant nécessaire à la fusion de la brasure (5) étant fourni par ladite source de courant de soudage elle-même, caractérisé en ce qu'il consiste à utiliser un plateau tournant (10) associé à des moyens moteurs d'entraînement en pas à pas et muni, de part et d'autre d'une plaque résistive (T'), d'un certain nombre de logements (11) recevant et maintenant lesdites extrémités de contact (4), la pince de soudage (2-2) étant écartée de sa position normale de soudage et amenée dans une position de rééquipement pour laquelle les embouts de soudage (3) des électrodes viennent se positionner respectivement vis-à-vis de logements (11) libres dudit plateau (10), par suite de quoi les extrémités de contact usagées correspondantes (4), une fois désolidarisées desdits embouts (3), sont recueillies par ces logements (11), le plateau (10) est pivoté d'un pas pour amener en face desdits embouts (3) des extrémités de contact neuves (4), lesquelles sont alors fixées à leur tour par brasage sur les embouts de soudage respectifs (3) des électrodes, suite à quoi la pince ainsi rééquipée est ramenée en position de soudage jusqu'au prochain cycle d'échange.

2. Machine pour la mise en oeuvre du procédé de la revendication 1, caractérisée en ce qu'elle comporte un plateau tournant (10) accouplé à des moyens moteurs d'entraînement en pas à pas, ce plateau (10) étant associé:
(a) à un poste de chargement d'extrémités de contact (4) neuves, ledit plateau (10) comportant à cet effet au moins un alvéole (11) de chargement propre à recevoir une extrémité de contact (4) neuve lors de son arrêt en face dudit poste ; et
(b) à un poste de brasage-débrasage d'extrémités de contact (4) respectivement neuves et usagées, la machine (10) comportant à cet effet au moins une paire de mâchoires (14, 15) propres à enserrer une extrémité de contact (4) en cours de débrasage, et ledit poste de brasage-débrasage comportant une plaque résistive (T') sur laquelle peut prendre appui ladite extrémité de contact (4) et permettant le passage du courant de brasage ou de débrasage par cette extrémité,
et en ce que les différents organes de la machine sont associés à des moyens de commande séquentielle automatique assurant qu'une opération de chargement d'extrémités de contact neuves (4) audit poste de chargement s'effectue pendant une opération de débrasage d'extrémités usagées audit poste de brasage-débrasage, et que ledit alvéole de chargement (11), équipé d'au moins une extrémité de contact neuve (4), vienne ensuite par une rotation dudit plateau (10), au niveau dudit poste de brasage-débrasage, pour que ladite extrémité neuve (4) puisse être brasée sur l'électrode (1) préalablement débarrassée de son extrémité de contact usagée.

3. Machine selon la revendication 2, caractérisée en ce que ledit poste de chargement comprend un chargeur (9) disposé radialement par rapport audit plateau tournant (10), et dans lequel lesdites extrémités de contact neuves (4) sont sollicitées élastiquement vers ledit plateau.

4. Machine selon la revendication 3, caractérisée en ce que ledit alvéole de chargement (11) comporte un clip élastique (13) ouvert vers ledit chargeur (9) et apte à recevoir et à maintenir élastiquement au moins une extrémité de contact neuve (4).

5. Machine selon l'une quelconque des revendications 2 à 4, caractérisée en ce que ledit poste de brasage-débrasage comporte une mâchoire fixe (14) et une mâchoire mobile (15) et actionnable par un vérin ou analogue (12), ces mâchoires étant de préférence pivotantes.

6. Machine selon l'une quelconque des revendications 2 à 5, caractérisée en ce que lesdits postes de chargement et de brasage-débrasage sont diamétralement opposés par rapport audit plateau (10), et en ce que lesdits moyens de commande séquentielle commandent, après une opération de débrasage d'extrémités de contact usagées, une première rotation dudit plateau (10) propre à amener les extrémités de contact (4) neuves dudit poste de chargement audit poste de brasage-débrasage, déplacement pendant lequel les extrémités débrasées sont évacuées, l'opération de brasage desdites extrémités neuves sur les électrodes, et une seconde rotation dudit plateau (10) en sens inverse, pour le ramener dans sa position initiale de chargement d'extrémités (4) neuves audit poste de chargement.

7. Machine selon la revendication 6, caractérisée en ce que lors de ladite première rotation du plateau (10) des premiers détecteurs de proximité (19) permettent de s'assurer de la présence des extrémités de contact (4) usagées en cours d'évacuation, et des seconds détecteurs de proximité (17) permettent de s'assurer de la présence d'extrémités de contact (4) neuves en cours de transfert vers le poste de brasage-débrasage.

8. Machine selon l'une quelconque des revendications 2 à 7, caractérisée en ce que lesdits moyens de commande séquentielle automatique assurent une anticipation de la commande d'ouverture de la pince de soudage (2-2), portant lesdites électrodes (1), par rapport à l'instant de la coupure du courant de débrasage, cette coupure intervenant immédiatement avant la rupture du contact entre ladite plaque résistive (T') et les extrémités de contact usagées (4).

## Claims

1. A method of replacing contact ends (4) on spot-welding resistance electrodes (1) of the kind comprising an electrode body (1) for fitting on to a holding arm (2) and connecting to a source of high-intensity welding current and to a circuit (6, 7) for supplying cooling water, the electrode also comprising a welding connector (3) secured to the end of the body (1), the connector (3) having a consumable contact end for making contact with the metal plates (T) for welding and transmitting the pressure and intensity of the welding current thereto, the contact end (4) of the welding connectors being a component separate from the connector (3) and being connected to the connector by brazing, the current for melting and brazing (5) being supplied by the welding current source itself, the method being characterised in that it consists in using a turntable (10) associated with powered step-by-step drive means and provided on either side of a resistive plate (T') with a number of recesses (11) for receiving and holding the contact ends (4), the welding terminal (2-2) being spaced apart from its normal welding position and brought into a refitting position in which the welding connectors (3) of the electrodes are positioned opposite respective empty recesses (11) in the table (10), as a result of which the corresponding worn contact ends (4), after being loosened from the connectors (3), are collected by the recesses (11), the turntable (10) is pivoted by one step in order to bring the connectors (3) opposite new contact ends (4), which are then in turn secured by brazing to the respective welding connectors (3) of the electrodes, after which the refitted terminal is returned to the welding position until the next replacement cycle.

2. A machine for working the method according to claim 1, characterised in that it comprises a turntable (10) coupled to powered step-by-step drive means, the table (10) being associated with:
(a) a station for loading new contact ends (4), for which purpose the table (10) has at least one loading cavity (11) adapted to receive a new contact end (4) when stopped opposite the aforementioned station; and
(b) a brazing and de-brazing station for new and worn contact ends (4) respectively, for which purpose the machine (10) has at least one pair of jaws (14, 15) adapted to grip a contact and (4) during de-brazing, and the brazing and de-brazing station comprises a resistive plate (T') for supporting the contact end (4) so as to convey brazing or de-brazing current via the aforementioned contact end, and
in that the various components of the machine are associated with automatic sequential control means for ensuring that an operation for loading new contact ends (4) at the loading station is performed during an operation of de-brazing worn ends at the brazing and de-brazing station, and that the loading cavity (11), equipped with at least one new contact end (4), is then brought by a rotation of the turntable (10) to the level of the brazing and de-brazing station, so that the new end (4) can be brazed to the electrode (1) after the worn contact end has been removed therefrom.

3. A machine according to claim 2, characterised in that the loading station comprises a loader disposed radially with respect to the turntable (10), and in which the new contact ends (4) are resiliently urged towards the table.

4. A machine according to claim 3, characterised in that the loading cavity (11) comprises a resilient clip (13) open towards the loader (9) and adapted to receive and resiliently hold at least one new contact end (4).

5. A machine according to any of claims 2 to 4, characterised in that the brazing and de-brazing station has a fixed jaw (14) and a movable jaw (15) actuated by a jack or the like (12), the jaws preferably being pivotable.

6. A machine according to any of claims 2 to 5, characterised in that the loading and brazing and de-brazing stations are diametrically opposite relative to the table(10),and in that the sequential control means, after an operation for de-brazing worn contact ends,bring about a first rotation of the table (10) for bringing the new contact ends (4) from the loading station to the brazing and de-brazing station, during which movement the de-brazed ends are discharged, the operation of brazing the new ends to the electrodes, and a second rotation of the table (10)in the reverse direction to bring it back to its initial position for loading new ends (4) at the loading station.

7. A machine according to claim 6, characterised in that during the first rotation of the table (10), first proximity detectors (19) ascertain the presence of the worn contact ends (4) during evacuation, and second proximity detectors (17) ascertain the presence of new contact ends (4) in course of transfer to the brazing and de-brazing station.

8. A machine according to any of claims 2 to 7, characterised in that the automatic sequential control means anticipate the command to open the welding terminal (2-2) bearing the electrodes (1), with respect to the instant when the de-brazing current is cut off, the cut-off occurring immediately before the break in contact between the resistive plate (T') and the worn contact ends (4).

## Patentansprüche

1. Verfahren zum Auswechseln von Kontaktenden (4) bei Widerstandspunktschweißelektroden, welche einen Elektrodenkörper (1), der geeignet ist, auf einem Stützarm (2) angeordnet zu werden und mit einer Schweißstromquelle mit geringer Intensität verbunden zu werden, sowie eine Leitung (6,7) zur Zuführung von Kühlwasser aufweisen, wobei die Elektrode außerdem eine Schweißkappe (3) aufweist, die fest an dem Ende des Körpers (1) befestigt ist und selbst ein verbrauchbares Kontaktende (4) aufweist, das dazu dient, den Kontakt mit den zu verschweißenden Blechen (T) sicherzustellen und den Druck und die Intensität des Schweißstromes darauf zu übertragen, wobei das Kontaktende (4) der Schweißkappen ein von der Kappe (3) verschiedenes Stück ist und mit dieser Kappe durch Lötung verbunden wird, wobei der zum Schmelzen des Lotes (5) notwendige Strom durch die Schweißstromquelle selbst geliefert wird,
dadurch gekennzeichnet,
daß es darin besteht, eine drehbare Platte (10) zu gebrauchen, die mit Schrittmotorantriebsmitteln verbunden sind und beiderseits einer Widerstandsplatte (T') mit einer bestimmten Anzahl von Ausnehmungen (11) versehen ist, welche die Kontaktenden (4) aufnehmen und halten, wobei die Schweißzange (2-2) aus ihrer normalen Schweißposition gespreizt wird und in eine Position zur Wiederausrüstung gebracht wird, in welcher die Schweißkappen (3) der Elektroden sich jeweils gegenüberliegend zu den freien Ausnehmungen (11) der Platte (10) positionieren, worauf die jeweiligen gebrauchten Kontaktenden (4), nachdem sie einmal von den Kappen (3) gelöst sind, von diesen Ausnehmungen (11) aufgenommen werden, wobei die Platte (10) einen Schritt weitergeschwenkt wird, um den Kappen (3) neue Kontaktenden (4) gegenüberzulegen, welche dann auf ihrem Weg durch Lötung an den jeweiligen Schweißkappen (3) der Elektroden befestigt werden, worauf die Zange derart wiederausgerüstet wieder in die Schweißposition bis zum nächsten Wechselzyklus gebracht wird.

2. Vorrichtung zur Durchführung des Verfahrens nach Anspruch 1,
dadurch gekennzeichnet,
daß diese eine drehbare Platte (10) aufweist, welche mit Schrittmotorantriebsmitteln zum diskontinuierlichen Antrieb gekoppelt ist, wobei die Platte (10) verbunden ist:
(a) mit einem Posten zur Ladung von neuen Kontaktenden (4), wobei die Platte (10) zu diesem Zweck wenigstens eine Zelle (11) zur Ladung aufweist, welche geeignet ist, ein neues Kontaktende (4) während des Haltens gegenüberliegend zu diesem Posten aufzunehmen; und
(b) mit einem Posten zum An- und Ablöten von neuen bzw. gebrauchten Kontaktenden (4), wobei die Maschine (10) zu diesem Zweck wenigstens ein Paar von Backen (14,15) aufweist, die geeignet sind, ein Kontaktende (4) im Laufe des Ablötens zu umschließen, und wobei der Posten zum An- und Ablöten eine Widerstandsplatte (T') aufweist, auf welcher sich das Kontaktende (4) abstützen kann, und welche den Durchtritt von Strom zum Anlöten oder Ablöten dieses Endes erlaubt,
und daß die verschiedenen Elemente der Maschine mit sequentiellen automatischen Steuerungsmitteln verbunden sind, welche sicherstellen, daß ein Ladungsvorgang für neue Kontaktenden (4) an dem Ladungsposten während eines Ablötungsvorgangs für gebrauchte Enden an dem Posten zum An- und Ablöten erfolgt, und daß die Ladungszelle (11), welche wenigstens mit einem neuen Kontaktende (4) ausgerüstet ist, dann durch eine Drehung der Platte (10) an den Ort des Postens zum An- und Ablöten gelangt, damit das neue Ende (4) an die Elektrode (1) angelötet werden kann, welche vorangehend von ihrem gebrauchten Kontaktende befreit worden ist.

3. Maschine nach Anspruch 2,
dadurch gekennzeichnet,
daß der Ladungsposten einen Lader (9) aufweist, der radial im Verhältnis zu der drehbaren Platte (10) angeordnet ist, und in welchem die neuen Kontaktenden (4) elastisch gegen diese Platte gedrückt werden.

4. Maschine nach Anspruch 3,
dadurch gekennzeichnet,
daß die Ladungszelle (11) eine elastische Klemme (13) aufweist, die offen gegen den Lader (9) ist und geeignet ist, wenigstens ein neues Kontaktende (4) aufzunehmen und elastisch zu halten.

5. Maschine nach irgendeinem der Ansprüche 2 bis 4,
dadurch gekennzeichnet,
daß der Posten zum An- und Ablöten eine feste Backe (14) und eine bewegliche Backe (15) aufweist, welche durch ein Schraubgewinde (12) oder dergl. betätigbar sind, wobei die Backen bevorzugt schwenkbar aneinander angelenkt sind.

6. Maschine nach irgendeinem der Ansprüche 2 bis 5,
dadurch gekennzeichnet,
daß die Posten zur Ladung und zum An- und Ablöten diametral gegenüberliegend im Verhältnis zur Platte (10) angeordnet sind, und daß die sequentiellen Steuerungsmittel nach einem Ablötungsvorgang für die gebrauchten Kontaktenden eine erste Drehung der Platte (10), die geeignet ist, die neuen Kontaktenden (4) vom Ladungsposten zum Posten zum An- und Ablöten zu bringen, wobei bei der Verschiebung die abgelöteten Enden evakuiert werden, den Anlötungsvorgang der neuen Enden an den Elektroden eine zweite Drehbewegung der Platte (10) in umgekehrter Richtung steuern, um diese in ihre Anfangsposition zur Ladung von neuen Enden (4) an dem Ladungsposten zurückzubringen.

7. Maschine nach Anspruch 6,
dadurch gekennzeichnet,
daß während der ersten Drehung der Platte (10) erste Abstandssensoren (19) es erlauben, die Anwesenheit von gebrauchten Kontaktenden (4) im Laufe der Evakuierung sicherzustellen, und zweite Abstandsdetektoren (17) es erlauben, die Anwesenheit von neuen Kontaktenden (4) im Laufe des Transfers zum Posten zum An- und Ablöten sicherzustellen.

8. Maschine nach irgendeinem der Ansprüche 2 bis 7,
dadurch gekennzeichnet,
daß die sequentiellen automatischen Steuerungsmittel eine Vorwegnahme der Öffungssteuerung der Schweißzange (2-2), welche die Elektroden (1) trägt, im Verhältnis zum Augenblick des Abschneidens des Ablötungsstromes sicherstellen, wobei das Abschneiden unmittelbar vor dem Abreißen des Kontaktes zwischen der Widerstandsplatte (T') und den gebrauchten Kontaktenden (4) erfolgt.
